(19) Europäisches Patentamt
European Patent Office
Office européen des brevets

(11) **EP 3 074 744 B1**

(12) **FASCICULE DE BREVET EUROPEEN**

(45) Date de publication et mention de la délivrance du brevet:
**23.10.2019 Bulletin 2019/43**

(51) Int Cl.:
*G01M 3/22* *(2006.01)*   *F17C 13/12* *(2006.01)*
*G01N 1/22* *(2006.01)*

(21) Numéro de dépôt: **14802918.4**

(22) Date de dépôt: **27.11.2014**

(86) Numéro de dépôt international:
**PCT/EP2014/075822**

(87) Numéro de publication internationale:
**WO 2015/078972 (04.06.2015 Gazette 2015/22)**

(54) **SURVEILLANCE D'UNE CUVE ETANCHE ET THERMIQUEMENT ISOLANTE**

ÜBERWACHUNG EINER VERSIEGELTEN UND WÄRMEISOLIERTEN WANNE

MONITORING OF A SEALED AND THERMALLY INSULATED VAT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2013 FR 1361899**

(43) Date de publication de la demande:
**05.10.2016 Bulletin 2016/40**

(73) Titulaire: **GAZTRANSPORT ET TECHNIGAZ**
**78470 Saint-Rémy-lès-Chevreuse (FR)**

(72) Inventeurs:
• **SPITTAEL, Laurent**
  **F-78960 Voisins le Bretonneux (FR)**
• **DELETRE, Bruno**
  **F-78000 Versailles (FR)**
• **LOMBARD, Fabrice**
  **F-78190 Trappes (FR)**
• **HAQUIN, Nicolas**
  **F-92100 Boulogne Billancourt (FR)**
• **DIOUF, Abdoulaye**
  **F-92380 Chilly Mazarin (FR)**
• **BEAUVAIS, David**
  **F-92400 Courbevoie (FR)**
• **PRUNIER, Raphaël**
  **F-92340 Bourg-la-Reine (FR)**
• **BIEDERMANN, Eric**
  **F-71230 Saint-Vallier (FR)**

(74) Mandataire: **Loyer & Abello**
**9, rue Anatole de la Forge**
**75017 Paris (FR)**

(56) Documents cités:
**FR-A1- 2 317 649**   **FR-A1- 2 517 802**
**FR-A1- 2 535 831**   **US-A1- 2009 193 884**
**US-B1- 6 427 543**

EP 3 074 744 B1

## Description

## Domaine technique

L'invention se rapporte au domaine de la surveillance des cuves étanches et thermiquement isolantes destinées à contenir un gaz combustible liquéfié à basse température, en particulier dans le cas d'une cuve à membrane dans laquelle une paroi de la cuve comporte une structure multicouche montée sur une paroi porteuse, la structure multicouche comprenant une membrane d'étanchéité en contact avec le gaz combustible liquéfié contenu dans la cuve et une barrière thermiquement isolante disposée entre la membrane d'étanchéité et la paroi porteuse, et dans laquelle la barrière thermiquement isolante comporte des matières solides isolantes et une phase gazeuse maintenue sous une pression relative négative par un dispositif d'aspiration connecté à la barrière thermiquement isolante.

## Arrière-plan technologique

Des cuves étanches et thermiquement isolantes peuvent être utilisées pour stocker et/ou transporter des gaz combustibles liquéfiés à basse température, par exemple un gaz à forte teneur en méthane dénommé couramment Gaz Naturel Liquéfié (GNL) dont le point d'ébullition est à environ -162°C à pression atmosphérique.

Dans la technologie des cuves à membrane, une paroi de la cuve comporte une structure multicouche montée sur une paroi porteuse et comprenant au moins une membrane d'étanchéité et au moins une barrière thermiquement isolante disposée entre la membrane d'étanchéité et la paroi porteuse. La ou chaque barrière thermiquement isolante comporte des matières solides isolantes formant une surface de support pour la ou chaque membrane d'étanchéité.

Afin d'augmenter le pouvoir isolant de la ou chaque barrière thermiquement isolante, on a proposé dans la publication FR-A-2535831 de maintenir la phase gazeuse de la barrière thermiquement isolante secondaire sous une pression absolue inférieure à la pression atmosphérique ambiante, c'est-à-dire une pression relative négative.

Par ailleurs, l'exploitation d'une telle cuve de gaz liquéfié combustible suppose de garantir des conditions de sécurité strictes, et notamment de détecter les éventuels défauts d'étanchéité d'une membrane aussi efficacement possible.

Ainsi, certaines réglementations exigent d'analyser le contenu des espaces d'isolation au moins toutes les 30 minutes.

Le document FR2317649 divulgue un procédé pour contrôler les variations de porosité des membranes d'étanchéité primaire et secondaire disposées de part et d'autre d'un espace intermédiaire. La barrière d'isolation thermique secondaire est remplie d'un mélange d'azote et d'argon. L'espace intermédiaire entre les deux membranes d'étanchéité est balayé au moyen d'un courant d'azote et les teneurs en méthane et en argon sont analysées dans le courant d'azote de sorte à détecter des fuites de la membrane d'étanchéité primaire ou de la membrane d'étanchéité secondaire. L'espace intermédiaire est maintenu en dépression de sorte à favoriser la migration du gaz à travers les membranes d'étanchéité.

## Résumé

Une idée à la base de l'invention est de fournir des procédés et dispositifs de surveillance adaptés pour détecter de manière efficace la présence du gaz combustible dans la barrière thermiquement isolante, y compris lorsque la phase gazeuse est maintenue sous une pression relative négative.

Selon un mode de réalisation, l'invention fournit un procédé de surveillance d'une cuve étanche et thermiquement isolante destinée à contenir un gaz combustible liquéfié à basse température,
dans lequel une paroi de la cuve comporte une structure multicouche montée sur une paroi porteuse, la structure multicouche comprenant une membrane d'étanchéité en contact avec le gaz combustible liquéfié contenu dans la cuve et une barrière thermiquement isolante disposée entre la membrane d'étanchéité et la paroi porteuse, la barrière thermiquement isolante comportant des matières solides isolantes et une phase gazeuse maintenue sous une pression relative négative, le procédé comportant :

> obtenir un échantillon de gaz dilué par prélèvement d'un échantillon de la phase gazeuse sous la pression relative négative dans la barrière thermiquement isolante à travers une canalisation de prélèvement débouchant à l'extérieur de la paroi de cuve et par ajout d'une quantité mesurée de gaz inerte à la phase gazeuse ayant été prélevée,
> comprimer, c'est à dire élever la pression de, l'échantillon de gaz dilué jusqu'à une pression de fonctionnement d'un analyseur de gaz, et
> mesurer une concentration du gaz combustible dans l'échantillon de gaz dilué avec l'analyseur de gaz.

Selon des modes de réalisation, un tel procédé de surveillance peut comporter une ou plusieurs des caractéristiques suivantes.

Selon un mode de réalisation non couvert par la revendication 1, le procédé comporte en outre :
déterminer une concentration du gaz combustible dans la phase gazeuse de la barrière thermiquement isolante en fonction de la concentration mesurée et de la quantité de gaz inerte ajoutée à la phase gazeuse.

Selon un mode de réalisation particulier, le procédé comporte :

- déterminer un taux de dilution provoqué par l'ajout d'une quantité mesurée de gaz inerte à la phase gazeuse ayant été prélevée en fonction de mesures de la pression et de la température de la phase gazeuse ayant été prélevée avant et après l'ajout de la quantité mesurée de gaz inerte à la phase gazeuse ; et

- déterminer une concentration du gaz combustible dans la phase gazeuse de la barrière thermiquement isolante en fonction de la concentration mesurée et du taux de dilution provoqué par l'ajout d'une quantité mesurée de gaz inerte.

Le gaz combustible peut être constitué de Gaz Naturel Liquéfié, de Gaz de Pétrole Liquéfié (GPL), d'éthylène ou autre.

L'utilisation d'un gaz inerte permet d'augmenter la quantité de matière dans l'échantillon à analyser sans risquer de produire de mélange explosif. Par exemple, le gaz inerte peut être choisi dans le groupe constitué du diazote, de l'hélium, de l'argon et de leurs mélanges.

Selon des modes de réalisation, la pression relative négative correspond à une pression absolue inférieure à 10 kPa, de préférence inférieure à 1 kPa.

Selon des modes de réalisation, la pression de fonctionnement de l'analyseur de gaz est comprise entre 80 kPa et 120 kPa, de préférence entre 86 kPa et 108 kPa. Avec ces pressions de fonctionnement, il est possible d'utiliser des analyseurs de gaz relativement peu coûteux et facilement disponibles.

La mesure de concentration du gaz combustible peut être réalisée selon diverses techniques de détection connues. Par exemple, l'analyseur de gaz peut comporter un détecteur de gaz combustible choisi dans le groupe constitué des détecteurs à infrarouge, notamment ceux fonctionnant par mesure d'absorbance et/ou de transmittance, et des détecteurs à cellule électrochimique.

Deux méthodes peuvent être employées pour diluer la phase gazeuse à basse pression présente dans la barrière isolante. Une première méthode non couverte par la revendication 1 consiste à mélanger le gaz inerte à la phase gazeuse en amont du prélèvement de l'échantillon, à savoir dans la barrière isolante. Une deuxième méthode consiste à mélanger le gaz inerte à la phase gazeuse en aval du prélèvement de l'échantillon, à savoir dans le dispositif de surveillance. Ces deux méthodes peuvent être combinées.

Selon un mode de réalisation correspondant à la première méthode susmentionnée, l'étape d'obtenir l'échantillon de gaz dilué comporte :

ajouter une quantité contrôlée de gaz inerte à la phase gazeuse dans la barrière thermiquement isolante pour augmenter la pression relative de la phase gazeuse dans la barrière thermiquement isolante depuis une première valeur négative jusqu'à une deuxième valeur négative, et
prélever un échantillon de la phase gazeuse sous la pression relative égale deuxième valeur négative dans la barrière thermiquement isolante à travers la canalisation de prélèvement débouchant à l'extérieur de la paroi de cuve pour obtenir l'échantillon de gaz dilué, et
diminuer la pression relative de la phase gazeuse dans la barrière thermiquement isolante depuis la deuxième valeur négative jusqu'à la première valeur négative après avoir prélevé l'échantillon de la phase gazeuse.

Selon des modes de réalisation, la première valeur négative est inférieure à 1 kPa, de préférence inférieure ou égale à 0.1 kPa, et la deuxième valeur négative est supérieure ou égale à 1 kPa.

Selon un mode de réalisation correspondant à la deuxième méthode susmentionnée, l'étape d'obtenir l'échantillon de gaz dilué comporte :

prélever un échantillon de la phase gazeuse sous la pression relative négative dans la barrière thermiquement isolante à travers la canalisation de prélèvement débouchant à l'extérieur de la paroi de cuve, et
ajouter une quantité mesurée de gaz inerte à l'échantillon de phase gazeuse prélevé.

Dans ce cas, les étapes de prélever, diluer et comprimer l'échantillon peuvent être effectuées conjointement au moyen d'un dispositif d'aspiration par effet Venturi, le dispositif d'aspiration par effet Venturi comportant :

une conduite principale présentant une entrée reliée à une source du gaz inerte sous pression et une sortie reliée à une enceinte de mesure ou à une enceinte intermédiaire, et
une conduite d'aspiration présentant un côté amont relié à la canalisation de prélèvement et un côté aval débouchant latéralement dans un convergent-divergent de la conduite principale de manière qu'un flux de gaz inerte dans la conduite principale produise une dépression dans la conduite d'aspiration.

Selon un mode de réalisation l'étape de prélever l'échantillon comporte : pomper l'échantillon de phase gazeuse à travers la canalisation de prélèvement vers une enceinte intermédiaire, et
isoler l'enceinte intermédiaire de la barrière thermiquement isolante.

Selon un autre mode de réalisation correspondant à la deuxième méthode susmentionnée, la quantité mesurée de gaz inerte est ajoutée dans l'enceinte intermédiaire, l'étape de comprimer l'échantillon de gaz dilué comportant :
pomper l'échantillon de gaz dilué depuis l'enceinte intermédiaire vers une enceinte de mesure couplée à l'analyseur de gaz.

Dans des modes de réalisation, l'étape de comprimer l'échantillon de gaz dilué, c'est-à-dire d'élever la pression de l'échantillon de gaz, peut comporter : stocker l'échantillon de phase gazeuse prélevé dans une enceinte intermédiaire reliée à la canalisation de prélèvement, et

déplacer une paroi mobile dans l'enceinte intermédiaire pour confiner l'échantillon de gaz dilué dans une enceinte de mesure de plus petite capacité que l'enceinte intermédiaire.

Par exemple, l'enceinte de mesure est constituée d'une portion d'extrémité de l'enceinte intermédiaire ou d'une enceinte de plus petite taille reliée à l'enceinte intermédiaire.

Selon un mode de réalisation, les étapes de diluer et comprimer l'échantillon sont effectuées au moyen d'un dispositif d'aspiration par effet Venturi, le dispositif d'aspiration par effet Venturi comportant :

sous pression et une sortie reliée à une enceinte de mesure, et
une conduite d'aspiration présentant un côté amont relié à l'enceinte intermédiaire et un côté aval débouchant latéralement dans un convergent-divergent de la conduite principale de manière qu'un flux de gaz inerte dans la conduite principale produise une dépression dans la conduite d'aspiration.

Selon un mode de réalisation, l'invention fournit aussi un dispositif de surveillance convenant pour une cuve étanche et thermiquement isolante destinée à contenir un gaz combustible liquéfié à basse température, dans laquelle une paroi de la cuve comporte une structure multicouche montée sur une paroi porteuse, la structure multicouche comprenant une membrane d'étanchéité en contact avec le gaz combustible liquéfié contenu dans la cuve et une barrière thermiquement isolante disposée entre la membrane d'étanchéité et la paroi porteuse, la barrière thermiquement isolante comportant des matières solides isolantes et une phase gazeuse maintenue sous une pression relative négative, le dispositif de surveillance comportant :

une canalisation de prélèvement reliant la barrière thermiquement isolante à l'extérieur de la paroi de cuve, ladite canalisation de prélèvement étant équipée d'une vanne d'isolement ;
une enceinte intermédiaire reliée à la barrière thermiquement isolante par la canalisation de prélèvement ;
une enceinte de mesure reliée à l'enceinte intermédiaire ,
un analyseur de gaz couplé à l'enceinte de mesure pour mesurer une concentration du gaz combustible dans l'enceinte de mesure,
un dispositif de pompage connecté à la canalisation de prélèvement et apte à prélever un échantillon de la phase gazeuse sous la pression relative négative dans la barrière thermiquement isolante et à transférer l'échantillon de la phase gazeuse vers l'enceinte de mesure,
un réservoir de gaz inerte relié à l'enceinte intermédiaire et agencé pour ajouter dans l'enceinte intermédiaire une quantité de gaz inerte à la phase gazeuse ayant été prélevée, et
un dispositif de mesure pour mesurer la quantité de gaz inerte ajoutée à la phase gazeuse.

Selon des modes de réalisation, un tel dispositif de surveillance peut comporter une ou plusieurs des caractéristiques suivantes.

Selon un mode de réalisation, l'enceinte de mesure est reliée directement ou indirectement à la canalisation de prélèvement par l'intermédiaire d'une vanne d'isolement.

Selon un mode de réalisation, le dispositif comporte en outre un système de traitement de données apte à déterminer une concentration du gaz combustible dans la phase gazeuse de la barrière thermiquement isolante en fonction de la concentration mesurée par l'analyseur de gaz et de la quantité de gaz inerte ajoutée à la phase gazeuse.

Selon un mode de réalisation, le système de traitement de données est apte à déterminer un taux de dilution provoqué par l'ajout d'une quantité contrôlée de gaz inerte à la phase gazeuse à prélever ou ayant été prélevée en fonction de mesures de la pression et de la température de la phase gazeuse à prélever ou ayant été prélevée avant et après l'ajout de la quantité contrôlée de gaz inerte à la phase gazeuse et à déterminer une concentration du gaz combustible dans la phase gazeuse de la barrière thermiquement isolante en fonction de la concentration mesurée par l'analyseur de gaz et du taux de dilution provoqué par l'ajout d'une quantité contrôlée de gaz inerte.

Le dispositif de pompage peut être réalisé de diverses manières. Selon un mode de réalisation, le dispositif de pompage comporte une pompe à vide, par exemple de type Roots ou autre.

Le dispositif de pompage peut être dédié au dispositif de surveillance ou, à des fins d'économie, le dispositif de pompage peut être mutualisé entre le dispositif de surveillance et un dispositif de régulation de pression de la barrière isolante servant à maintenir en permanence la pression relative négative dans la barrière isolante.

Selon un mode de réalisation, le dispositif de pompage comporte un dispositif d'aspiration par effet Venturi, le dispositif d'aspiration par effet Venturi comportant :

une conduite principale présentant une entrée reliée au réservoir de gaz inerte et une sortie reliée à l'enceinte de mesure, et
une conduite d'aspiration présentant un côté amont relié à la canalisation de prélèvement par l'intermédiaire de l'enceinte intermédiaire et un côté aval débouchant latéralement dans un convergent-divergent de la conduite principale de manière qu'un flux de gaz inerte dans la conduite principale produise une dépression dans la conduite d'aspiration.

Selon un mode de réalisation, l'invention fournit aussi une cuve étanche et thermiquement isolante destinée à contenir un gaz combustible liquéfié à basse température et équipée d'un dispositif de surveillance précité,

dans laquelle une paroi de la cuve comporte une structure multicouche montée sur une paroi porteuse, la structure multicouche comprenant une membrane d'étanchéité primaire en contact avec le gaz combustible liquéfié contenu dans la cuve, une membrane d'étanchéité secondaire disposée entre la membrane d'étanchéité primaire et la paroi porteuse, une barrière thermiquement isolante primaire disposée entre la membrane d'étanchéité primaire et la membrane d'étanchéité secondaire, et une barrière thermiquement isolante secondaire disposée entre la membrane d'étanchéité secondaire et la paroi porteuse, et dans laquelle une ou chaque barrière thermiquement isolante comporte des matières solides isolantes et une phase gazeuse maintenue sous une pression relative négative, le dispositif de surveillance comportant une première conduite de prélèvement débouchant dans la barrière thermiquement isolante primaire et une deuxième conduite de prélèvement débouchant dans la barrière thermiquement isolante secondaire.

Une telle cuve peut faire partie d'une installation de stockage terrestre, par exemple pour stocker du GNL ou être installée dans une structure flottante, côtière ou en eau profonde, notamment un navire méthanier, une unité flottante de stockage et de regazéification (FSRU), une unité flottante de production et de stockage déporté (FPSO) et autres.

Selon un mode de réalisation, un navire pour le transport d'un produit liquide froid comporte une double coque et une cuve précitée disposée dans la double coque.

Selon un mode de réalisation, l'invention fournit aussi un procédé de chargement ou déchargement d'un tel navire, dans lequel on achemine un produit liquide froid à travers des canalisations isolées depuis ou vers une installation de stockage flottante ou terrestre vers ou depuis la cuve du navire.

Selon un mode de réalisation, l'invention fournit aussi un système de transfert pour un produit liquide froid, le système comportant le navire précité, des canalisations isolées agencées de manière à relier la cuve installée dans la coque du navire à une installation de stockage flottante ou terrestre et une pompe pour entraîner un flux de produit liquide froid à travers les canalisations isolées depuis ou vers l'installation de stockage flottante ou terrestre vers ou depuis la cuve du navire.

Certains aspects de l'invention partent de l'idée de faciliter l'analyse d'une phase gazeuse disponible sous une faible pression, et par conséquent en petite quantité, en limitant les coûts des moyens de prélèvement et/ou des moyens d'analyse.

**Brève description des figures**

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

- La figure 1 est une représentation schématique d'une cuve à membrane et d'un dispositif de surveillance de cette cuve.

- La figure 2 est une représentation schématique d'une enceinte de mesure utilisable dans le dispositif de surveillance de la figure 1.

- La figure 3 est une représentation analogue à la figure 1 montrant un dispositif de surveillance de la cuve selon un autre mode de réalisation.

- La figure 4 est une représentation agrandie en coupe de la zone IV de la figure 4.

- La figure 5 est une représentation analogue à la figure 1 montrant un dispositif de surveillance de la cuve selon un autre mode de réalisation.

- La figure 6 est un diagramme temporel montrant une variation de pression qui peut être réalisée dans la barrière isolante de la cuve de la figure 5.

- La figure 7 est une vue d'artiste schématique représentant une cuve de navire méthanier écorchée pouvant être équipée d'un dispositif de surveillance et un terminal de chargement/déchargement de cette cuve.

**Description détaillée de modes de réalisation**

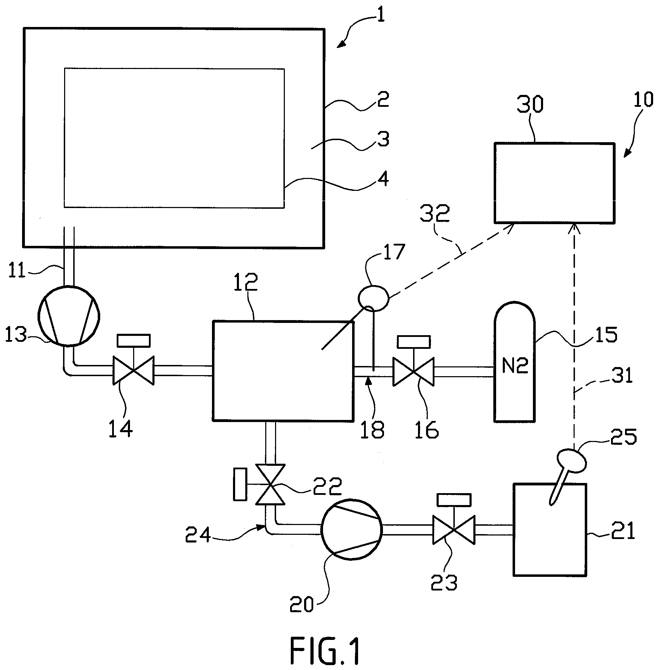

En référence à la figure 1, une cuve à membrane 1 est représentée très schématiquement en section. Elle comporte une structure porteuse 2 définissant une cavité dans laquelle la cuve est construite, une barrière isolante 3 comportant des éléments isolants fixés sur les surfaces intérieures de la structure porteuse 2, et une membrane 4 étanche au liquide et au gaz, par exemple en tôle métallique, recouvrant toute la surface intérieure de la cuve.

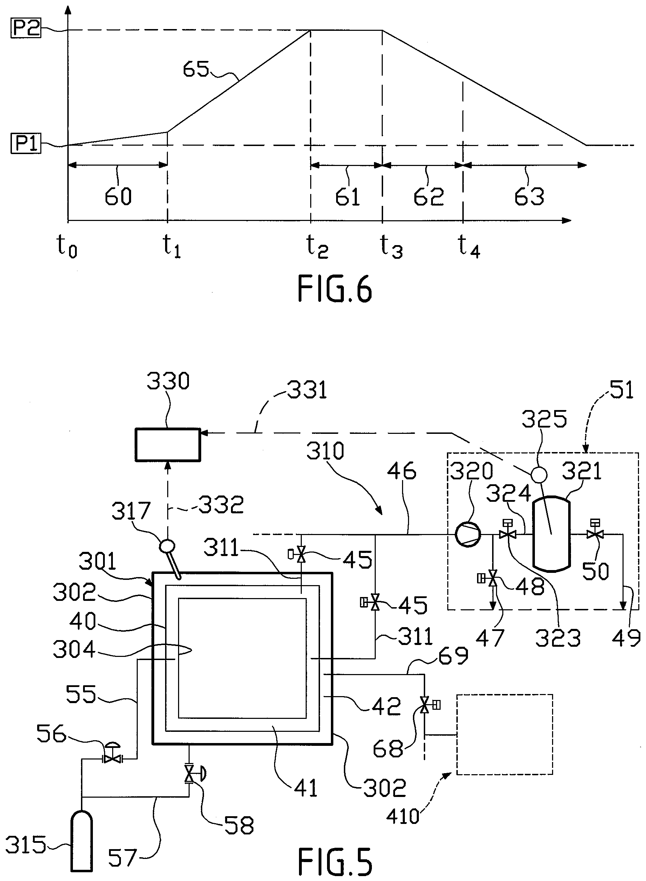

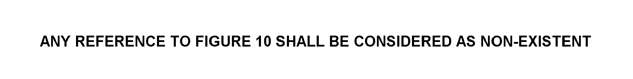

Selon un mode de réalisation représenté sur la figure 5, une membrane étanche secondaire peut être interposée entre la structure porteuse 2 et la membrane étanche 4, de manière à séparer deux barrières isolantes de part et d'autre de la membrane étanche secondaire. Cette disposition n'est pas représentée sur la figure 1.

La structure porteuse 2 est également réalisée de manière sensiblement étanche au gaz. Ainsi, la barrière isolante 3 est agencée dans un espace d'isolation qui est isolé de la pression ambiante par la membrane étanche 4 et par la structure porteuse 2. Des dispositifs de régulation de pression non représentés peuvent être employés pour maintenir une faible pression de gaz dans l'espace d'isolation, par exemple de l'ordre de 0,1 à 1 kPa, de manière à abaisser encore la conductivité thermique de la barrière isolante 3.

Un dispositif de surveillance peut être employé pour réaliser la surveillance de la composition de la phase gazeuse dans l'espace d'isolation, afin de détecter une éventuelle fuite dans la membrane étanche 4. La surveillance de l'unique espace isolation 3 qui va être décrite ci-après peut être réalisée de la même manière dans chacun des espaces d'isolation dans le cas d'une cuve ayant plusieurs membranes successives.

Pour cela, le dispositif de surveillance 10 de la figure 1 comporte une canalisation de prélèvement 11 qui traverse la structure porteuse 2 et qui débouche dans la barrière isolante 3 pour pouvoir aspirer un échantillon de la phase gazeuse à cet endroit. De multiples canalisations de prélèvement non représentées peuvent être agencées de la même manière à différents emplacements de la cuve pour pouvoir échantillonner de la phase gazeuse dans plusieurs zones correspondantes de la barrière isolante 3.

La canalisation de prélèvement 11 relie la barrière isolante 3 à une enceinte intermédiaire 12 par l'intermédiaire d'une pompe à vide 13 et d'une vanne d'isolement 14. Une conduite de liaison 18 relie par ailleurs un réservoir de diazote sous pression 15 à l'enceinte intermédiaire 12 par l'intermédiaire d'une vanne d'isolement 16. Un système de capteurs 17 est prévu pour pouvoir mesurer une quantité de diazote introduite depuis le réservoir de diazote sous pression 15 dans l'enceinte intermédiaire 12. Des capteurs utilisables pour cela sont par exemple un débitmètre couplé à la conduite de liaison 18 et/ou des capteurs de température et de pression couplés à l'enceinte intermédiaire 12.

L'enceinte intermédiaire 12 peut être exploitée de la manière suivante :

- Un échantillon de la phase gazeuse présente dans la barrière isolante 3 est transféré par la pompe à vide 13 dans l'enceinte intermédiaire 12. L'échantillon peut être une très petite quantité de la phase gazeuse, en fonction de la puissance de la pompe à vide 13 et/ou du temps disponible pour effectuer le prélèvement.
- La vanne 14 est fermée pour isoler l'enceinte intermédiaire 12.
- Une quantité déterminée de diazote est ajoutée depuis le réservoir 15 dans l'enceinte intermédiaire 12 au moyen de la vanne 16. Par exemple, la quantité de diazote peut être mesurée par l'intermédiaire des mesures de la pression et de la température dans l'enceinte intermédiaire 12 avant et après l'ajout de diazote. L'ajout de diazote dans l'enceinte 12 permet de diluer l'échantillon pour à la fois obtenir une quantité de matière plus importante à analyser et relever quelque peu la pression de la phase gazeuse à analyser.

La pression dans l'enceinte intermédiaire 12 est alors supérieure à celle régnant dans la barrière isolante 3. Elle est par exemple de l'ordre de 1 à 10 kPa. Cela n'est pas forcément suffisant pour pouvoir réaliser facilement une analyse chimique, étant donné que les analyseurs de gaz les plus courants fonctionnent à des pressions proches de la pression atmosphérique. Il est donc possible, soit de réaliser l'analyse du gaz dilué directement dans l'enceinte intermédiaire 12, soit d'effectuer auparavant une compression supplémentaire du gaz dilué pour pouvoir utiliser un appareil d'analyse de gaz plus rapide et/ou moins coûteux.

Pour réaliser cette compression supplémentaire, on a représenté sur la figure 1 une conduite de liaison 24 reliant l'enceinte intermédiaire 12 à une enceinte de mesure 21 de plus petite taille par l'intermédiaire d'une deuxième pompe 20 et de deux vannes d'isolement 22 et 23. La conduite de liaison 24 peut être exploitée de la manière suivante :

- Après l'ajout de diazote dans l'enceinte intermédiaire 12, les vannes 14 et 16 restent fermées et les vannes 22 et 23 sont ouvertes et la pompe 20 est activée pour comprimer et transférer le gaz dilué depuis l'enceinte intermédiaire 12 à l'enceinte de mesure 21.
- Lorsque la pression dans l'enceinte de mesure 21 atteint une valeur suffisante pour le fonctionnement de l'analyseur de gaz 25, la vanne 23 est fermée et la concentration de méthane dans le gaz dilué est mesurée avec l'analyseur de gaz 25.

Des analyseurs de gaz 25 permettant de mesurer une concentration de méthane sont par exemple disponibles auprès de la société suédoise Consilium AB.

Un système de traitement de données 30 peut alors être utilisé pour calculer la concentration de méthane dans la barrière isolante 3 avant dilution, à partir des signaux de mesures fournis par l'analyseur de gaz 25, représentés schématiquement par la flèche 31, et des signaux de mesures fournis par le système de capteurs 17, représentés schématiquement par la flèche 32.

La concentration de méthane dans la barrière isolante peut notamment être calculée sur la base de l'équation suivante :

$$[C(CH_4)]_{\text{barrière isolante}} = \frac{[C(CH_4)]_{\text{mesurée}}}{\vartheta}$$

avec :

- $[C\,(CH_4)]_{\text{barrière isolante}}$ : la concentration de méthane dans la barrière isolante avant dilution ;
- $\vartheta$ : le taux de dilution provoqué par l'ajout d'une quantité contrôlée de gaz inerte à la phase gazeuse ayant été prélevée ; et
- $[C\,(CH_4)]_{\text{mesurée}}$ : la concentration de méthane mesurée par l'analyseur de gaz 25.

Le taux de dilution $\vartheta$ est calculé au moyen des signaux de mesures fournis par le système de capteurs 17 et délivrant des mesures de la pression et de la température dans l'enceinte intermédiaire 12 avant et après l'ajout de diazote.

Selon un mode de réalisation, le taux de dilution $\vartheta$ peut être calculé au moyen de la formule suivante :

$$\vartheta = \frac{P_{Avant\ dilution}}{P_{Après\ dilution}}$$

avec:

$P_{Avant\ dilution}$ : la pression (en Pa) à l'intérieur de l'enceinte intermédiaire avant dilution ; et

$P_{Après\ dilution}$ : la pression (en Pa) à l'intérieur de l'enceinte intermédiaire après dilution par ajout d'une quantité contrôlée de gaz inerte.

Selon un autre mode de réalisation, le taux de dilution $\vartheta$ peut être calculé en tenant compte de la température de la phase gazeuse ayant été prélevée avant et après l'ajout de gaz inerte à la phase gazeuse, au moyen de la formule suivante :

$$\vartheta = \frac{P_{Avant\ dilution} \times T_{Après\ dilution}}{P_{Après\ dilution} \times T_{Avant\ dilution}}$$

avec :

$P_{Avant\ dilution}$ : la pression (en Pa) à l'intérieur de l'enceinte intermédiaire avant dilution ;

$P_{Après\ dilution}$ : la pression (en Pa) à l'intérieur de l'enceinte intermédiaire après dilution par ajout d'une quantité contrôlée de gaz inerte ;

$T_{Avant\ dilution}$ : la température (en K) régnant à l'intérieur de l'enceinte intermédiaire avant dilution; et

$T_{Après\ dilution}$ : la température (en K) régnant à l'intérieur de l'enceinte intermédiaire après dilution.

Le système de traitement de données 30, par exemple un ordinateur programmé, peut remplir en outre une fonction d'alarme en émettant un signal d'alarme lorsque la concentration de méthane dans la barrière isolante 3 dépasse un seuil prédéterminé.

De la même manière, on peut rechercher les concentrations d'autres gaz, notamment d'oxygène, de vapeur d'eau, ou d'autres hydrocarbures dans la phase gazeuse prélevée. Des analyseurs de gaz correspondants sont disponibles sur le marché pour produire ces mesures. Les produits hydrocarbures sont en général détectables au moyen d'un analyseur à infrarouge.

Sur la figure 1, on a représenté deux pompes 13 et 20 situées l'une en amont et l'autre en aval de l'enceinte intermédiaire 12. Dans une variante, une seule des deux pompes 13 et 20 est prévue et sert à effectuer toutes les étapes, à savoir le prélèvement de l'échantillon initial, puis la compression de l'échantillon dilué. L'une des pompes 13 et 20 peut remplir cumulativement la fonction de maintenir la pression de fonctionnement basse dans l'espace d'isolation 3. Pour cela, une conduite de rejet vers l'atmosphère et une vanne de contrôle correspondante doivent être prévues.

Dans une variante, une pompe supplémentaire non représentée est prévue sur la canalisation 18 pour transférer le diazote.

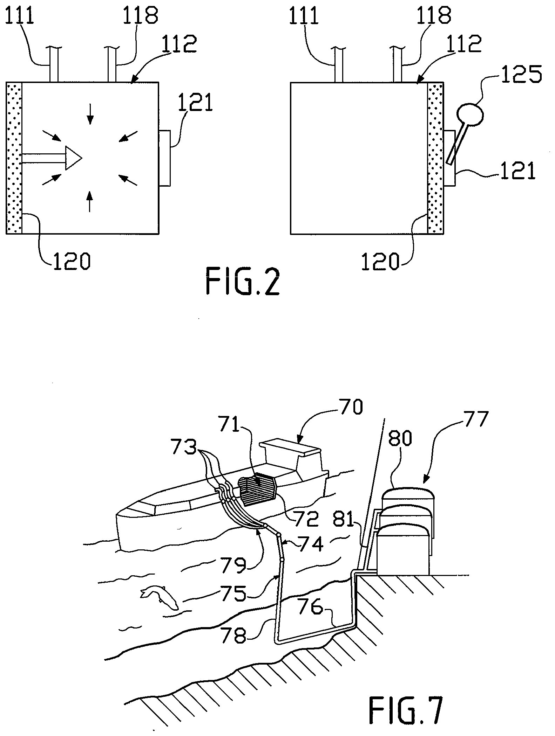

La figure 2 représente un autre mode de réalisation du dispositif de surveillance, dans lequel la compression supplémentaire du gaz dilué peut être effectuée directement dans l'enceinte intermédiaire. Les éléments analogues ou identiques à ceux de la figure 1 portent un chiffre de référence augmenté de 100 par rapport à la figure 1.

Dans le mode de réalisation de la figure 2, l'enceinte de mesure 121 est attenante à une extrémité de l'enceinte intermédiaire 112 et un piston 120 est monté mobile de manière étanche dans l'enceinte intermédiaire 112 pour pouvoir repousser le gaz dilué contenu dans l'enceinte intermédiaire 112 vers l'enceinte de mesure 121. La vue de gauche représente le piston 120 au début de l'étape de compression et la vue de droite représente le piston 120 à la fin de l'étape de compression. Pour le reste, le fonctionnement est similaire au dispositif de surveillance de la figure 1.

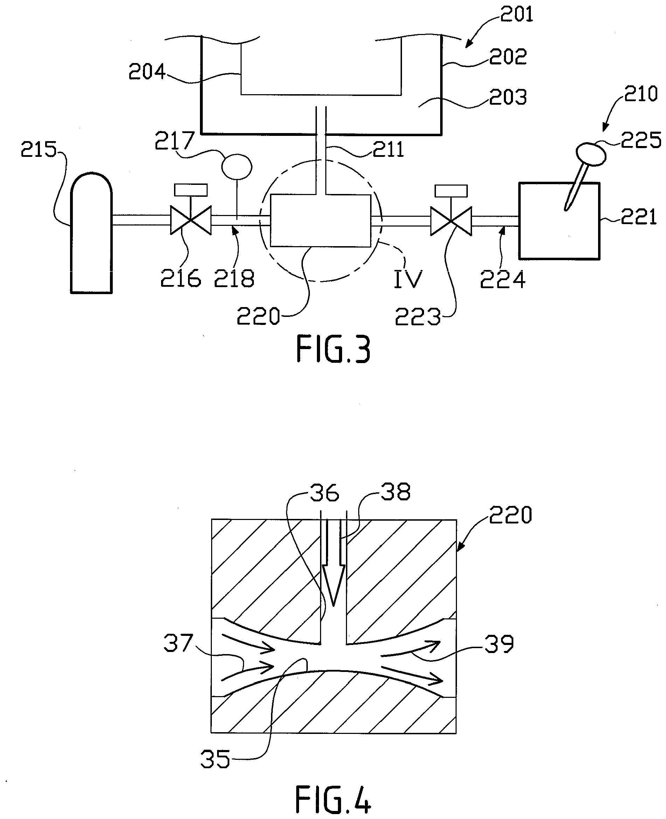

Il existe différentes manières de provoquer l'aspiration de l'échantillon à analyser à travers la canalisation de prélèvement. Dans la mode de réalisation de la figure 3, on utilise un dispositif d'aspiration à effet Venturi, représenté de manière agrandie sur la figure 4, qui permet de réaliser simultanément l'aspiration d'une quantité de la phase gazeuse dans la barrière isolante et la dilution de cet échantillon dans une quantité de gaz inerte. Les éléments analogues ou identiques à ceux de la figure 1 portent un chiffre de référence augmenté de 200 par rapport à la figure 1.

Le dispositif d'aspiration à effet Venturi 220 comporte une conduite principale 35 ayant une géométrie convergente-divergente et présentant un côté d'entrée relié par la conduite de liaison 218 au réservoir de diazote sous pression 215 et un côté de sortie relié par la conduite de liaison 224 à l'enceinte de mesure 221. Une vanne d'isolement 216 est prévue sur la conduite de liaison 218 pour contrôler la distribution de diazote à partir du réservoir 215. Un système de capteurs 217 est prévu pour mesurer la quantité de diazote introduite depuis le réservoir de diazote sous pression 215 dans la conduite principale 35. Une vanne d'isolement 223 est prévue sur la conduite de liaison 224 pour pouvoir fermer l'enceinte de mesure 221 pendant la durée de la mesure par l'analyseur de gaz 225.

Le fonctionnement est le suivant :

- Lorsque les vannes 216 et 223 sont ouvertes, un flux de diazote sous pression pénètre dans le côté entrée du convergent-divergent, comme indiqué par les flèches 37 et provoque par effet Venturi une dépression dans la canalisation latérale 36 du dispositif d'aspiration à effet Venturi 220 qui est reliée à la canalisation de prélèvement 211. Il s'ensuit l'aspiration d'une quantité de la phase gazeuse contenue dans la barrière isolante 203, comme indiqué par la flèche 38. Le flux de phase gazeuse aspiré et le flux de diazote se mélangent dans le côté sortie du convergent-divergent, comme indiqué par les flèches 39 et s'écoulent vers l'enceinte de mesure 221 à travers la conduite de liaison 224.

- On procède ensuite à l'analyse de l'échantillon de gaz dilué obtenu dans l'enceinte de mesure 221, de la même manière que précédemment décrite.

De préférence, une vanne non représentée est également prévue sur la canalisation de prélèvement 211 que l'on ouvre seulement après avoir établi un flux d'azote stable à une vitesse appropriée dans la conduite principale 35. Ceci permet d'éviter un reflux du diazote en direction de la barrière isolante 203 lors de la phase de démarrage du flux de diazote. On peut de la même manière fermer cette vanne à la fin du prélèvement avant d'interrompre le flux de diazote.

Le dispositif d'aspiration à effet Venturi 220 de la figure 4 peut aussi être employé conjointement avec une enceinte intermédiaire située en amont de la canalisation latérale 36.

Dans un mode de réalisation correspondant non représenté, le dispositif de surveillance 210 de la figure 3 est connecté à l'enceinte intermédiaire 12 de la figure 1, de sorte que la canalisation latérale 36 du dispositif d'aspiration à effet Venturi 220 prend la place de la canalisation de liaison 24 de la figure 1. La fonction de la pompe 20 peut alors être réalisée par le dispositif d'aspiration à effet Venturi 220 qui remplace la pompe 20, et qui réalise en outre la dilution de l'échantillon dans le diazote. En conséquence, un ajout préalable de diazote dans l'enceinte intermédiaire 12 n'est pas indispensable dans ce cas et le réservoir 15 de la figure 1 peut être éventuellement supprimé.

Les modes de réalisation décrits ci-dessus réalisent un ajout de diazote dans l'échantillon de phase gazeuse prélevé dans la barrière isolante. Dans une variante non couverte par la revendication 1, un apport de diazote peut être réalisé dans la barrière isolante avant le prélèvement de l'échantillon à analyser.

Un mode de réalisation ne correspondant pas à l'invention revendiquée va maintenant être décrit en référence aux figures 5 et 6. Les éléments analogues ou identiques à ceux de la figure 1 portent un chiffre de référence augmenté de 300 par rapport à la figure 1.

La figure 5 met en évidence une cuve 301 à double membrane d'étanchéité, dans laquelle une membrane d'étanchéité secondaire 40 sépare la barrière isolante en une barrière isolante primaire disposée dans un espace d'isolation primaire 41 situé entre la membrane primaire 304 et la membrane secondaire 40 et une barrière isolante secondaire disposée dans un espace d'isolation secondaire 42 situé entre la membrane secondaire 40 et les parois porteuses 302.

On décrit premièrement un dispositif de surveillance 310 destiné à surveiller la composition de la phase gazeuse dans l'espace primaire 41.

La canalisation de prélèvement 311 débouche d'un côté dans l'espace primaire 41 et de l'autre côté dans un collecteur de gaz 46 et porte une vanne d'isolement 45. Le collecteur de gaz 46 est relié au côté aspiration d'une pompe à vide 320 qui permet ainsi d'aspirer un échantillon de la phase gazeuse présente dans l'espace primaire 41 lorsque la vanne 45 est ouverte. Le côté refoulement de la pompe à vide 320 est relié par la conduite de liaison 324 munie d'une vanne 323 à l'enceinte de mesure 321 équipée de l'analyseur de gaz 325. La vanne 323 permet de fermer l'enceinte de mesure 321 après prélèvement de l'échantillon à analyser et pendant la durée de la mesure.

Une conduite de dérivation 47 munie d'une vanne 48 s'embranche sur la conduite de liaison 324 en amont de la vanne 323 et permet de diriger le flux de gaz refoulé par la pompe 320 vers d'autres installation que l'enceinte de mesure 321, notamment vers un mât de dégazage débouchant dans l'atmosphère ambiante ou tout autre système d'évacuation, éventuellement à travers un système de retraitement des gaz pour éviter une pollution. Cette disposition permet notamment de purger et mettre sous vide tout le circuit de prélèvement de gaz avant chaque prise d'échantillon, afin de rendre à la fois plus précise et plus rapide l'opération de prise d'échantillon et d'analyse. Cette disposition peut être prévue de la même manière dans les autres modes de réalisation décrits plus haut.

Une conduite d'évacuation 49 munie d'une vanne 50 peut être également prévue pour relier l'enceinte de mesure 321 au mât de dégazage ou autre système d'évacuation. Cette disposition permet de relâcher l'échantillon de gaz après analyse sans mobiliser la conduite de dérivation 47. Elle permet aussi d'effectuer un balayage de gaz à travers l'enceinte de mesure 321, par exemple avec un gaz inerte afin d'éviter l'accumulation de traces de gaz susceptibles de fausser les analyses successives.

Le dispositif de surveillance 310 peut être utilisé de la manière suivante :

- En supposant que le circuit de prélèvement de gaz a été initialement purgé et que les vannes 48 et 50 ont été fermées, la première étape est d'activer la pompe 320, à moins qu'elle fonctionne de manière continue, et d'ouvrir la vanne 45 et la vanne 323 pour provoquer l'aspiration d'une quantité de la phase gazeuse de l'espace primaire 41 dans l'enceinte de mesure 321.

- Lorsque la pression dans l'enceinte de mesure 321 atteint une valeur compatible avec le fonctionnement de l'analyseur de gaz 325, la vanne 323 est fermée et l'analyse du gaz prélevé est effectuée comme décrit précédemment.

- Après l'analyse, l'enceinte de mesure 321 est purgée en faisant le vide.

L'équipement d'analyse 51 comprenant la pompe à vide 320, l'analyseur de gaz 325, l'enceinte de mesure 321 et ses circuits annexes peut être réalisé sous la forme d'un appareil mobile portatif. Le collecteur de gaz 46 permet de mutualiser l'équipement d'analyse 51 pour plusieurs canalisations de prélèvement débouchant dans différentes zones de l'espace primaire 41 et éventuellement de l'espace secondaire 42. La figure 5 montre ainsi deux canalisations de prélèvement débouchant dans différentes zones de l'espace primaire 41. Le prélèvement d'échantillon peut ainsi être réalisé successivement dans les différentes zones en ouvrant séquentiellement les différentes vannes 45.

La montée en pression dans l'enceinte de mesure 321 peut être très lente selon la puissance de la pompe à vide 320 et la pression de gaz régnant dans la barrière isolante 3. Pour limiter la durée du processus de prélèvement et d'analyse, il est possible de gérer la pression dans l'espace primaire 41 de manière à augmenter temporairement la pression à chaque fois qu'un échantillon à analyser doit être prélevé.

Pour cela, la figure 5 montre un dispositif d'injection comprenant un réservoir de diazote sous pression 315 une conduite d'injection primaire 55 munie d'une vanne 56 et reliant le réservoir de diazote 315 à l'espace primaire 41 et une conduite d'injection secondaire 57 munie d'une vanne 58 et reliant le réservoir de diazote 315 à l'espace secondaire 42.

La vanne 56 peut être commandée de manière à réguler la pression dans l'espace primaire de la manière illustrée sur la figure 6.

La figure 6 montre la pression de gaz 65 dans l'espace primaire en fonction du temps au cours d'un cycle de prélèvement d'un échantillon à analyser. En dehors de la période de prélèvement, la pression est maintenue à une pression basse P1, par exemple de l'ordre de 0,1 à 1 kPa, afin de maximiser l'isolation thermique.

Les moyens utilisés pour maintenir cette pression basse peuvent être un système non représenté complètement indépendant du dispositif de surveillance décrit ici. Par exemple, il s'agit de pompes à vide régulées par un automate ayant une consigne de pression et capable de démarrer les pompes lorsque cette consigne est franchie par le haut et d'arrêter les pompes lorsque cette consigne est franchie par le bas, de préférence avec une hystérèse pour améliorer la stabilité de l'ensemble.

Dans un mode de réalisation, ce maintien de pression basse peut être au contraire une deuxième fonction de la pompe à vide 320, afin de réaliser une économie de matériel.

Quelques instants avant le prélèvement effectif de l'échantillon, le cycle de prélèvement est débuté à l'instant t0 en désactivant les moyens utilisés pour maintenir la pression basse, ce qui provoque une première remontée de la pression, relativement lente, du fait des fuites naturelles de l'espace primaire 41, pendant la durée 60.

A l'instant t1, la vanne 56 est ouverte pour provoquer une injection de diazote gazeux dans l'espace primaire 41. Cette injection est réalisée jusqu'à l'obtention d'une pression haute P2 à l'instant t2. La vanne 56 est alors fermée. Puis une durée d'attente 61 est prévue jusqu'à l'instant t3 pour que la phase gazeuse s'homogénéise suffisamment par diffusion naturelle.

La pression P2 est une pression relative négative moins basse que P1, par exemple de l'ordre de 0,5 à 10 kPa. Plus la pression P2 est élevée, plus la dépense énergétique nécessaire pour remettre l'espace primaire 41 à la pression P1 sera élevée.

A l'instant t3, la pompe à vide 30 est activée et la vanne 45 et la vanne 323 sont ouvertes pour provoquer l'aspiration d'une quantité de la phase gazeuse de l'espace primaire 41 dans l'enceinte de mesure 321 pendant une phase de prise d'échantillon 62. La pression dans l'espace primaire 41 commence alors à diminuer.

A l'instant t4, la vanne 323 est fermée et les moyens de maintien en pression sont réactivés pour faire baisser la pression dans l'espace primaire 41 jusqu'à la valeur de pression P1 et l'y maintenir jusqu'au prochain cycle de prélèvement. Ce cycle de prélèvement peut être réduit à une durée totale de quelques minutes.

En mesurant précisément la pression et la température dans l'espace primaire 41 au moyen du système de capteurs 317, il est possible de mesurer précisément le taux de dilution provoqué par l'ajout d'azote dans l'espace primaire 41, et donc de calculer a posteriori la concentration de gaz avant dilution. Le système de traitement de données 330 est employé pour cela. La mesure de température dans la cuve peut être effectuée par un système à fibres optiques ou autre.

La surveillance de l'espace secondaire 42 peut être réalisée de la même manière avec des moyens similaires à ceux décrits en référence à l'espace primaire 41. Pour cela un dispositif de surveillance de l'espace secondaire peut être réalisé de manière indépendante du dispositif de surveillance de l'espace primaire, comme cela est esquissé au chiffre 410. En variante, certains moyens peuvent être mutualisés pour la surveillance des deux espaces 41 et 42. Par exemple, dans un mode de réalisation non représenté, l'équipement d'analyse 51 peut être mutualisé en reliant la canalisation de prélèvement 69 munie de la vanne 68 au collecteur 46.

Dans un mode de réalisation non représenté, l'enceinte de mesure 321 du dispositif de surveillance 310 peut être réalisée de manière similaire à l'enceinte intermédiaire 112 de la figure 2, de manière à effectuer une montée en pression du gaz dans l'enceinte de mesure 321 avant son analyse. Un ajout supplémentaire de diazote dans l'enceinte de mesure 321 est possible mais n'est pas obligatoire, de sorte que la canalisation 118 de la figure 2 peut être supprimée dans ce mode de réalisation. Cette enceinte de mesure intégrant le moyen de compression peut être utilisée en combinaison avec la pompe à vide 320 ou préférentiellement sans pompe à vide du tout, ce qui permet de réduire le coût du dispositif de surveillance.

Dans un mode de réalisation, tout ou partie du dispositif de surveillance, notamment la pompe à vide 320, est disposé à l'intérieur d'une double cloison transversale appelée cofferdam séparant deux cuves d'un navire méthanier. Cette disposition facilite la mutualisation de la pompe avec plusieurs points de prélèvement situés à différents emplacements de l'une ou des deux cuves. Dans un mode de réalisation, on prévoit huit points de prélèvement par cuve, de préférence reliés à un même collecteur de prélèvement.

Bien que la description ci-dessus fasse uniquement référence au diazote et au méthane, d'autres couples de gaz combustible et gaz inerte peuvent être employés de manière similaire. Le gaz utilisé pour diluer la phase gazeuse prélevé doit être choisi de manière à éviter toute réaction chimique dangereuse, notamment explosive et à éviter de perturber la mesure de concentration des espèces chimiques recherchées.

Les techniques décrites ci-dessus pour réaliser un dispositif de surveillance des espaces d'isolation peuvent être utilisées dans différents types de réservoirs, par exemple pour surveiller l'espace primaire et ou l'espace secondaire d'un réservoir de GNL dans une installation terrestre ou dans un ouvrage flottant comme un navire méthanier ou autre.

En référence à la figure 10, une vue écorchée d'un navire méthanier 70 montre une cuve étanche et isolée 71 de forme générale prismatique montée dans la double coque 72 du navire. La paroi de la cuve 71 comporte une barrière étanche primaire destinée à être en contact avec le GNL contenu dans la cuve, une barrière étanche secondaire agencée entre la barrière étanche primaire et la double coque 72 du navire, et deux barrières isolante agencées respectivement entre la barrière étanche primaire et la barrière étanche secondaire et entre la barrière étanche secondaire et la double coque 72.

De manière connue en soi, des canalisations de chargement/déchargement 73 disposées sur le pont supérieur du navire peuvent être raccordées, au moyen de connecteurs appropriées, à un terminal maritime ou portuaire pour transférer une cargaison de GNL depuis ou vers la cuve 71.

La figure 10 représente un exemple de terminal maritime comportant un poste de chargement et de déchargement 75, une conduite sous-marine 76 et une installation à terre 77. Le poste de chargement et de déchargement 75 est une installation fixe off-shore comportant un bras mobile 74 et une tour 78 qui supporte le bras mobile 74. Le bras mobile 74 porte un faisceau de tuyaux flexibles isolés 79 pouvant se connecter aux canalisations de chargement/déchargement 73. Le bras mobile 74 orientable s'adapte à tous les gabarits de méthaniers. Une conduite de liaison non représentée s'étend à l'intérieur de la tour 78. Le poste de chargement et de déchargement 75 permet le chargement et le déchargement du méthanier 70 depuis ou vers l'installation à terre 77. Celle-ci comporte des cuves de stockage de gaz liquéfié 80 et des conduites de liaison 81 reliées par la conduite sous-marine 76 au poste de chargement ou de déchargement 75. La conduite sous-marine 76 permet le transfert du gaz liquéfié entre le poste de chargement ou de déchargement 75 et l'installation à terre 77 sur une grande distance, par exemple 5 km, ce qui permet de garder le navire méthanier 70 à grande distance de la côte pendant les opérations de chargement et de déchargement.

Pour engendrer la pression nécessaire au transfert du gaz liquéfié, on met en oeuvre des pompes embarquées dans le navire 70 et/ou des pompes équipant l'installation à terre 77 et/ou des pompes équipant le poste de chargement et de déchargement 75.

Bien que l'invention ait été décrite en liaison avec plusieurs modes de réalisation particuliers, il est bien évident qu'elle n'y est nullement limitée.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

**Revendications**

1. Procédé de surveillance d'une cuve étanche et thermiquement isolante (1, 201, 301) destinée à contenir un gaz combustible liquéfié à basse température, dans lequel une paroi de la cuve comporte une structure multicouche montée sur une paroi porteuse, la structure multicouche comprenant une membrane d'étanchéité en contact avec le gaz combustible liquéfié contenu dans la cuve et une barrière thermiquement isolante (3, 203, 41, 42) disposée entre la membrane d'étanchéité et la paroi porteuse, la barrière thermiquement isolante comportant des matières solides isolantes et une phase gazeuse maintenue sous une pression relative négative, le procédé comportant :

- mesurer une concentration du gaz combustible dans un échantillon de gaz dilué avec un analyseur de gaz (25, 125, 225, 325) ; ledit procédé étant **caractérisé en ce que** l'échantillon de gaz dilué dont la concentration est mesurée est obtenu

- par prélèvement d'un échantillon de la phase gazeuse sous la pression relative négative dans la barrière thermiquement isolante à travers une canalisation de prélèvement (11, 111, 211, 311, 69) débouchant à l'extérieur de la paroi de cuve ;

par ajout d'une quantité mesurée de gaz inerte à la phase gazeuse ayant été prélevée,
par élévation de la pression de l'échantillon de gaz dilué jusqu'à une pression de fonctionnement de l'analyseur de gaz (25, 125, 225, 325).

2. Procédé selon la revendication 1, comportant en outre :

- déterminer un taux de dilution provoqué par l'ajout d'une quantité mesurée de gaz inerte à la phase gazeuse ayant été prélevée en fonction de mesures de la pression et de la température de la phase gazeuse ayant été prélevée avant et après l'ajout de la quantité mesurée de gaz inerte à la phase gazeuse ; et
- déterminer une concentration du gaz combustible dans la phase gazeuse de la barrière thermiquement isolante en fonction de la concentration mesurée et du taux de dilution provoqué par l'ajout d'une quantité mesurée de gaz inerte.

3. Procédé selon l'une des revendications 1 à 2, dans lequel le gaz combustible est constitué de méthane.

4. Procédé selon l'une des revendications 1 à 3, dans lequel le gaz inerte est choisi dans le groupe constitué du diazote, de l'hélium, de l'argon et de leurs mélanges.

5. Procédé selon l'une des revendications 1 à 4, dans lequel la pression relative négative correspond à une pression absolue inférieure à 10 kPa, de préférence inférieure à 1 kPa.

6. Procédé selon l'une des revendications 1 à 5, dans lequel la pression de fonctionnement de l'analyseur de gaz (25, 125, 225, 325) est comprise entre 80kPa et 120kPa, de préférence entre 86 kPa et 108 kPa.

7. Procédé selon l'une des revendications 1 à 6, dans lequel l'analyseur de gaz comporte un détecteur de gaz combustible choisi dans le groupe constitué des détecteurs à infrarouge et des détecteurs à cellule électrochimique.

8. Procédé selon l'une quelconque des revendications 1 à 7, dans lequel l'étape d'élever la pression de l'échantillon de gaz dilué comporte :

stocker l'échantillon de phase gazeuse prélevé dans une enceinte intermédiaire (112, 321) reliée à la canalisation de prélèvement, et déplacer une paroi mobile dans l'enceinte intermédiaire pour confiner l'échantillon de gaz dilué dans une enceinte de mesure (121) de plus petite capacité que l'enceinte intermédiaire.

9. Procédé selon l'une des revendications 1 à 8, dans lequel l'étape d'obtenir l'échantillon de gaz dilué comporte :

prélever un échantillon de la phase gazeuse sous la pression relative négative dans la barrière thermiquement isolante à travers la canalisation de prélèvement débouchant à l'extérieur de la paroi de cuve, et ajouter une quantité mesurée de gaz inerte à l'échantillon de phase gazeuse prélevé.

10. Procédé selon la revendication 9, dans lequel les étapes de prélever, diluer et comprimer l'échantillon sont effectuées au moyen d'un dispositif d'aspiration par effet Venturi (220), le dispositif d'aspiration par effet Venturi comportant :

une conduite principale (35) présentant une entrée reliée à une source du gaz inerte sous pression et une sortie reliée à une enceinte de mesure ou à une enceinte intermédiaire, et une conduite d'aspiration (36) présentant un côté amont relié à la canalisation de prélèvement et un côté aval débouchant latéralement dans un convergent-divergent de la conduite principale de manière qu'un flux de gaz inerte dans la conduite principale produise une dépression dans la conduite d'aspiration.

11. Procédé selon la revendication 9 ou 10, dans lequel l'étape de prélever l'échantillon comporte :

pomper l'échantillon de phase gazeuse à travers la canalisation de prélèvement (11, 111, 211, 311) vers une enceinte intermédiaire (12, 112, 221, 321), et isoler l'enceinte intermédiaire de la barrière thermiquement isolante.

12. Procédé selon la revendication 11, dans lequel la quantité contrôlée de gaz inerte est ajoutée dans l'enceinte intermédiaire (12, 112), l'étape de comprimer l'échantillon de gaz dilué comportant :

pomper l'échantillon de gaz dilué depuis l'enceinte intermédiaire vers une enceinte de mesure (21, 121) couplée à l'analyseur de gaz.

13. Procédé selon la revendication 11, dans lequel les étapes de diluer et comprimer l'échantillon sont effectuées au moyen d'un dispositif d'aspiration par effet Venturi (220), le dispositif d'aspiration par effet Venturi comportant :

une conduite principale (35) présentant une entrée reliée à une source du gaz inerte sous pression et une sortie reliée à une enceinte de mesure, et
une conduite d'aspiration (36) présentant un côté amont relié à l'enceinte intermédiaire et un côté aval débouchant latéralement dans un convergent-divergent de la conduite principale de manière qu'un flux de gaz inerte dans la conduite principale produise une dépression dans la conduite d'aspiration.

14. Dispositif de surveillance (10, 210) convenant pour une cuve étanche et thermiquement isolante (1, 201) destinée à contenir un gaz combustible liquéfié à basse température, dans laquelle une paroi de la cuve comporte une structure multicouche montée sur une paroi porteuse, la structure multicouche comprenant une membrane d'étanchéité en contact avec le gaz combustible liquéfié contenu dans la cuve et une barrière thermiquement isolante (3, 203) disposée entre la membrane d'étanchéité et la paroi porteuse, la barrière thermiquement isolante comportant des matières solides isolantes et une phase gazeuse maintenue sous une pression relative négative,
le dispositif de surveillance comportant :

une canalisation de prélèvement (11, 111, 211) reliant la barrière thermiquement isolante à l'extérieur de la paroi de cuve, ladite canalisation de prélèvement (11, 111, 211) étant équipée d'une vanne d'isolement (14) ;
une enceinte de mesure (21, 121, 221) ;
un analyseur de gaz (25, 125, 225) couplé à l'enceinte de mesure pour mesurer une concentration du gaz combustible dans l'enceinte de mesure ;
un dispositif de pompage (20, 112, 220, 320) connecté à la canalisation de prélèvement et apte à prélever un échantillon de la phase gazeuse sous la pression relative négative dans la barrière thermiquement isolante et à transférer l'échantillon de la phase gazeuse vers l'enceinte de mesure (21, 121, 221),
ledit dispositif de surveillance étant **caractérisé en ce qu'**il comporte :

une enceinte intermédiaire (12, 112) reliée à la barrière thermiquement isolante par la canalisation de prélèvement et reliée à l'enceinte de mesure (21, 121, 221),
un réservoir de gaz inerte (15, 215) relié à l'enceinte intermédiaire (12, 112) et agencé pour ajouter dans l'enceinte intermédiaire (12, 112) une quantité de gaz inerte à la phase gazeuse ayant été prélevée, et
un dispositif de mesure (17, 217, 317) pour mesurer la quantité de gaz inerte ajoutée à la phase gazeuse.

15. Dispositif selon la revendication 14, comportant en outre un système de traitement de données (30, 330) apte à déterminer un taux de dilution provoqué par l'ajout d'une quantité contrôlée de gaz inerte à la phase gazeuse ayant été prélevé en fonction de mesures de la pression et de la température de la phase gazeuse ayant été prélevée avant et après l'ajout de la quantité contrôlée de gaz inerte à la phase gazeuse et à déterminer une concentration du gaz combustible dans la phase gazeuse de la barrière thermiquement isolante en fonction de la concentration mesurée par l'analyseur de gaz et du taux de dilution provoqué par l'ajout d'une quantité contrôlée de gaz inerte.

16. Dispositif selon la revendication 14 ou 15, dans lequel le dispositif de pompage comporte une pompe à vide (20).

17. Dispositif selon l'une des revendications 14 à 16, dans lequel le dispositif de pompage comporte un dispositif d'aspiration par effet Venturi (220), le dispositif d'aspiration par effet Venturi comportant :

une conduite principale (35) présentant une entrée reliée au réservoir de gaz inerte et une sortie reliée à l'enceinte de mesure, et
une conduite d'aspiration (36) présentant un côté amont relié à la canalisation de prélèvement par l'intermédiaire de l'enceinte intermédiaire et un côté aval débouchant latéralement dans un convergent-divergent de la conduite principale de manière qu'un flux de gaz inerte dans la conduite principale produise une dépression dans la conduite d'aspiration.

18. Cuve étanche et thermiquement isolante (71) destinée à contenir un gaz combustible liquéfié à basse température et équipée d'un dispositif de surveillance (10, 210, 310, 410) selon l'une des revendications 14 à 17,
dans laquelle une paroi de la cuve comporte une structure multicouche montée sur une paroi porteuse (302), la structure multicouche comprenant une membrane d'étanchéité primaire (304) en contact avec le gaz combustible liquéfié contenu dans la cuve, une membrane d'étanchéité secondaire (40) disposée entre la membrane d'étanchéité primaire et la paroi porteuse, une barrière thermiquement isolante primaire (41) disposée entre la membrane d'étanchéité primaire et la membrane d'étanchéité secondaire, et une barrière thermiquement isolante secondaire (42) disposée entre la membrane d'étanchéité secondaire et la paroi porteuse, et dans laquelle une ou chaque barrière thermiquement isolante comporte des matières solides isolantes et une phase gazeuse maintenue sous une pression relative négative, le dispositif de surveillance comportant une première conduite de prélèvement (311) débouchant dans la barrière thermiquement isolante primaire et une deuxième conduite de prélèvement (69) débouchant dans la barrière thermiquement isolante secondaire.

19. Navire (70) pour le transport d'un produit liquide froid, le navire comportant une double coque (72) et une cuve (71) selon la revendication 18 disposée dans la double coque.

20. Procédé de chargement ou déchargement d'un navire (70) selon la revendication 19, dans lequel on achemine un produit liquide froid à travers des canalisations isolées (73, 79, 76, 81) depuis ou vers une installation de stockage flottante ou terrestre (77) vers ou depuis la cuve du navire (71).

21. Système de transfert pour un produit liquide froid, le système comportant un navire (70) selon la revendication 19, des canalisations isolées (73, 79, 76, 81) agencées de manière à relier la cuve (71) installée dans la coque du navire à une installation de stockage flottante ou terrestre (77) et une pompe pour entrainer un flux de produit liquide froid à travers les canalisations isolées depuis ou vers l'installation de stockage flottante ou terrestre vers ou depuis la cuve du navire.

**Patentansprüche**

1. Verfahren zur Überwachung eines dichten und wärmeisolierten Tankes (1, 201, 301), dazu bestimmt, ein verflüssigtes brennbares Gas mit niedriger Temperatur zu enthalten,
wobei eine Wand des Tankes eine Mehrschichtanordnung aufweist, die auf eine Tragwand aufgetragen ist, wobei die Mehrschichtanordnung eine Abdichtungsmembran in Berührung mit dem verflüssigten brennbaren Gas, das im Tank enthalten ist, und eine wärmeisolierende Sperrschicht (3, 203, 41, 42), zwischen der Abdichtungsmembran und der Tragwand angeordnet, umfasst, wobei die wärmeisolierende Sperrschicht isolierende, feste Materialien und eine Gasphase, die unter negativem Relativdruck gehalten wird, umfasst, wobei das Verfahren umfasst:

- Messung der Konzentration des brennbaren Gases in einer verdünnten Gasprobe mit einem Gasanalysator (25, 125, 225, 325), wobei das genannte Verfahren **dadurch gekennzeichnet ist, dass** die verdünnte Gasprobe, deren Konzentration gemessen wird, erhalten wird
- durch Entnahme einer Probe der Gasphase unter dem negativen Relativdruck in der wärmeisolierenden Sperrschicht durch eine Probennahmeleitung (11, 111, 211, 311, 69), die außerhalb der Tankwand mündet,

durch Zusetzen einer gemessenen Menge inerten Gases zur entnommenen Gasphase,
durch Anheben des Druckes der verdünnten Gasprobe auf einen Arbeitsdruck des Gasanalysators (25, 125, 225, 325).

2. Verfahren nach Patentanspruch 1, außerdem umfassend:

- Bestimmen des Verdünnungsgrades, der durch das Zusetzen einer gemessenen Menge inerten Gases zur entnommenen Gasphase in Abhängigkeit von Druck- und Temperaturmessungen der entnommenen Gasphase vor und nach dem Zusetzen der gemessenen Menge inerten Gases zur entnommenen Gasphase, und
- Bestimmen der Konzentration des brennbaren Gases in der Gasphase der wärmeisolierenden Sperrschicht in Abhängigkeit von der gemessenen Konzentration und vom Verdünnungsgrad, der durch das Zusetzen einer gemessenen Menge inerten Gases hervorgerufen wurde.

3. Verfahren nach einem der Patentansprüche 1 bis 2, in dem das brennbare Gas Methan ist.

4. Verfahren nach irgendeinem der Patentansprüche 1 bis 3, in dem das inerte Gas aus der Gruppe gewählt wird, bestehend aus Stickstoff, Helium, Argon und Gemischen davon.

5. Verfahren nach irgendeinem der Patentansprüche 1 bis 4, in dem der negative Relativdruck einem absoluten Druck unter 10 kPa, vorzugsweise unter 1 kPa entspricht.

6. Verfahren nach irgendeinem der Patentansprüche 1 bis 5, in dem der Arbeitsdruck des Gasanalysators (25, 125, 225, 325) zwischen 80 kPa und 120 kPa liegt, vorzugsweise zwischen 86 kPa und 108 kPa.

7. Verfahren nach irgendeinem der Patentansprüche 1 bis 6, in dem der Gasanalysator einen Detektor für brennbares Gas umfasst, gewählt aus der Gruppe, bestehend aus Infrarotdetektoren und Detektoren mit einer elektrochemischen Zelle.

8. Verfahren nach irgendeinem der Patentansprüche 1 bis 7, in dem der Schritt des Anhebens des Druckes der verdünnten Gasprobe umfasst:

> Aufnahme der entnommenen Probe der Gasphase in einer mit der Probennahmeleitung verbundenen Vorkammer (112, 321), und Versetzen einer beweglichen Wand in der Vorkammer zum Einschließen der verdünnten Gasprobe in einer Messkammer (121) geringeren Fassungsvermögens, als dem der Vorkammer.

9. Verfahren nach irgendeinem der Patentansprüche 1 bis 8, in dem der Schritt des Erhaltens der verdünnten Gasprobe umfasst:

> Entnahme einer Probe der Gasphase unter dem negativen Relativdruck in der wärmeisolierenden Sperrschicht durch eine Probennahmeleitung, die außerhalb der Tankwand mündet, und Zusetzen einer gemessenen Menge inerten Gases zur entnommenen Probe der Gasphase.

10. Verfahren nach Patentanspruch 9, in dem die Schritte des Entnehmens, Verdünnens und Komprimierens der Probe mit Hilfe einer Venturieffekt-Saugvorrichtung (220) ausgeführt werden, wobei die Venturieffekt-Saugvorrichtung umfasst:

> eine Hauptleitung (35), die einen Einlass aufweist, der an eine Inertgasdruckquelle angeschlossen ist, und einen Auslass, der an eine Messkammer oder an eine Vorkammer angeschlossen ist, und eine Ansaugleitung (36), die ein Stromaufwärtsende aufweist, das an die Probennahmeleitung angeschlossen ist, und ein Stromabwärtsende, das seitlich in eine Einschnürung der Hauptleitung mündet, derart, dass eine Inertgasströmung in der Hauptleitung einen Unterdruck in der Saugleitung erzeugt.

11. Verfahren nach Patentanspruch 9 oder 10, in dem der Schritt der Probennahme umfasst: Pumpen der Gasphasenprobe durch die Probennahmeleitung (11, 111, 211, 311) in eine Vorkammer (12, 112, 221, 321), und Trennen der Vorkammer von der wärmeisolierenden Sperrschicht.

12. Verfahren nach Patentanspruch 11, in dem die gemessene Menge inerten Gases in der Vorkammer (12, 112) zugesetzt wird, wobei der Schritt des Komprimierens der verdünnten Gasprobe umfasst:

Pumpen der verdünnten Gasprobe aus der Vorkammer in eine Messkammer (21, 121), die mit dem Gasanalysator verbunden ist.

13. Verfahren nach Patentanspruch 11, in dem die Schritte des Verdünnens und Komprimierens der Probe mit Hilfe einer Venturieffekt-Saugvorrichtung (220) ausgeführt werden, wobei die Venturieffekt-Saugvorrichtung umfasst:

> eine Hauptleitung (35), die einen Einlass aufweist, der an eine Inertgasdruckquelle angeschlossen ist, und einen Auslass, der an eine Messkammer angeschlossen ist, und eine Ansaugleitung (36), die ein Stromaufwärtsende aufweist, das an die Vorkammer angeschlossen ist, und ein Stromabwärtsende, das seitlich in eine Einschnürung der Hauptleitung mündet, derart, dass eine Inertgasströmung in der Hauptleitung einen Unterdruck in der Saugleitung erzeugt.

14. Überwachungsvorrichtung (10, 210), für einen dichten und wärmeisolierten Tank (1, 201) geeignet, dazu bestimmt, ein verflüssigtes brennbares Gas mit niedriger Temperatur zu enthalten, wobei eine Wand des Tankes eine Mehrschichtanordnung aufweist, die auf eine Tragwand aufgetragen ist, wobei die Mehrschichtanordnung eine Abdichtungsmembran in Berührung mit dem verflüssigten brennbaren Gas, das im Tank enthalten ist, und eine wärmeisolierende Sperrschicht (3, 203), zwischen der Abdichtungsmembran und der Tragwand angeordnet, umfasst, wobei die wärmeisolierende Sperrschicht isolierende, feste Materialien und eine Gasphase, die unter negativem Relativdruck gehalten wird, umfasst, wobei die Überwachungsvorrichtung umfasst:

> eine Probennahmeleitung (11, 111, 211), die die wärmeisolierende Sperrschicht mit dem Äußeren der Tankwand verbindet, wobei die genannte Probennahmeleitung (11, 111, 211) mit einem Trennschieber (14) ausgestattet ist, eine Messkammer (21, 121, 221), einen Gasanalysator (25, 125, 225), der an die Messkammer angeschlossen ist, um die Konzentration des brennbaren Gases in der Messkammer zu messen, eine Pumpvorrichtung (20, 112, 220, 320), an die Probennahmeleitung angeschlossen und geeignet, eine Probe der Gasphase unter dem negativen Relativdruck in der wärmeisolierenden Sperrschicht zu entnehmen und die Gasphasenprobe in die Messkammer (21, 121, 221) umzupumpen, wobei die genannte Überwachungsvorrichtung **dadurch gekennzeichnet ist, dass** sie umfasst:

eine Vorkammer (12, 112), die durch die Probennahmeleitung mit der wärmeisolierenden Sperrschicht verbunden ist und die mit der Messkammer (21, 121, 221) verbunden ist,
einen Inertgasvorratsbehälter (15, 215), mit der Vorkammer (12, 112) verbunden und dafür angeordnet, in der Vorkammer (12, 112) der entnommenen Gasphase eine Menge Inertgas zuzusetzen, und eine Messvorrichtung (17, 217, 317) zum Messen der Menge Inertgas, die der Gasphase zugesetzt wird.

15. Vorrichtung nach Patentanspruch 14, außerdem ein Datenverarbeitungssystem (30, 330) umfassend, geeignet, den Verdünnungsgrad zu bestimmen, der durch das Zusetzen einer geregelten Menge Inertgas zur entnommenen Gasphase in Abhängigkeit von Druck- und Temperaturmessungen der entnommenen Gasphase vor und nach dem Zusetzen der geregelten Menge inerten Gases zur entnommenen Gasphase erzeugt wurde, und die Konzentration des brennbaren Gases in der Gasphase der wärmeisolierenden Sperrschicht in Abhängigkeit von der vom Gasanalysator gemessenen Konzentration und vom Verdünnungsgrad, der durch das Zusetzen einer geregelten Menge inerten Gases hervorgerufen wurde, zu bestimmen.

16. Vorrichtung nach Patentanspruch 14 oder 15, in der die Pumpvorrichtung eine Vakuumpumpe (20) umfasst.

17. Vorrichtung nach irgendeinem der Patentansprüche 14 bis 16, in der die Pumpvorrichtung eine Venturieffekt-Saugvorrichtung (220) umfasst, wobei die Venturieffekt-Saugvorrichtung umfasst:

eine Hauptleitung (35), die einen Einlass aufweist, der an den Inertgasvorratsbehälter angeschlossen ist, und einen Auslass, der an die Messkammer angeschlossen ist, und
eine Ansaugleitung (36), die ein Stromaufwärtsende aufweist, das über die Vorkammer an die Probennahmeleitung angeschlossen ist, und ein Stromabwärtsende, das seitlich in eine Einschnürung der Hauptleitung mündet, derart, dass eine Inertgasströmung in der Hauptleitung einen Unterdruck in der Saugleitung erzeugt.

18. Dichter und wärmeisolierter Tank (71), dazu bestimmt, ein verflüssigtes brennbares Gas mit niedriger Temperatur zu enthalten, und mit einer Überwachungsvorrichtung (10, 210, 310, 410) nach einem der Patentansprüche 14 bis 17 ausgestattet,
wobei eine Wand des Tankes eine Mehrschichtanordnung aufweist, die auf eine Tragwand (302) aufgetragen ist, wobei die Mehrschichtanordnung eine erste Abdichtungsmembran (304) in Berührung mit dem verflüssigten brennbaren Gas, das im Tank enthalten ist, aufweist, eine zweite Abdichtungsmembran (40), zwischen der ersten Abdichtungsmembran und der Tragwand angeordnet, eine erste wärmeisolierende Sperrschicht (41), zwischen der ersten Abdichtungsmembran und der zweiten Abdichtungsmembran angeordnet, und eine zweite wärmeisolierende Sperrschicht (42), zwischen der zweiten Abdichtungsmembran und der Tragwand angeordnet, umfasst, wobei eine oder jede wärmeisolierende Sperrschicht isolierende, feste Materialien und eine Gasphase, die unter negativem Relativdruck gehalten wird, umfasst, wobei die Überwachungsvorrichtung eine erste Probennahmeleitung (311) umfasst, die in die erste wärmeisolierende Sperrschicht mündet, und eine zweite Probennahmeleitung (69), die in die zweite wärmeisolierende Sperrschicht mündet.

19. Schiff (70) zum Transport eines kalten, flüssigen Gutes, wobei das Schiff einen Doppelwandrumpf (72) und einen Tank (71) nach Patentanspruch 18 im Doppelwandrumpf angeordnet aufweist.

20. Verfahren zum Be- oder Entladen eines Schiffes (70) nach Patentanspruch 19, in dem ein kaltes, flüssiges Gut durch isolierte Leitungen (73, 79, 76, 81) aus oder in eine schwimmende oder terrestrische Lagerungsanlage (77) in den oder aus dem Tank (71) des Schiffes gefördert wird.

21. Umpumpsystem für ein kaltes, flüssiges Gut, wobei das System ein Schiff (70) nach Patentanspruch 19 umfasst, isolierte Leitungen (73, 79, 76, 81), derart angeordnet, dass sie den im Rumpf des Schiffes installierten Tank (71) mit einer schwimmenden oder terrestrischen Lagerungsanlage (77) verbinden, und eine Pumpe zur Förderung eines Stromes kalten, flüssigen Gutes durch die isolierten Leitungen aus oder in die schwimmende oder terrestrische Lagerungsanlage in den oder aus dem Tank des Schiffes.

## Claims

1. A method for monitoring a sealed and thermally insulated tank (1, 201, 301) intended to contain a low-temperature liquefied fuel gas,
in which method a wall of the tank comprises a multilayer structure mounted on a bearing wall, the multilayer structure comprising a sealing membrane in contact with the liquefied fuel gas contained in the tank and a thermally insulating barrier (3, 203, 41, 42) arranged between the sealing membrane and the bearing wall, the thermally insulating barrier comprising insulating solid substances and a gaseous phase kept under a negative relative pressure, the method comprising:

- measuring a concentration of the fuel gas in the dilute gas sample using a gas analyzer, the method being **characterized in that** the dilute gas sample, the concentration of which is measured, is obtained
- by withdrawing a sample of the gaseous phase under the negative relative pressure in the thermally insulating barrier through a sampling duct (11, 111, 211, 311, 69) opening to the outside of the tank wall ;
- by adding a measured quantity of inert gas to the gaseous phase that has been withdrawn, and
- by raising the pressure of the dilute gas sample up to an operating pressure of a gas analyzer (25, 125, 225, 325).

2. The method as claimed in claim 1, further comprising:

- determining a dilution ratio brought about by the addition of a measued quantity of inert gas to the gaseous phase or that has been withdrawn according to measurements of the pressure and of the temperature of the gaseous phase that has been withdrawn before and after the addition of the measured quantity of inert gas to the gaseous phase; and
- determining a concentration of the fuel gas in the gaseous phase of the thermally insulating barrier as a function of the measured concentration and of the dilution ratio brought about by the addition of a measured quantity of inert gas.

3. The method as claimed in one of claims 1 and 2, in which the fuel gas consists of methane.

4. The method as claimed in one of claims 1 to 3, in which the inert gas is selected from the group consisting of dinitrogen, helium, argon and mixtures thereof.

5. The method as claimed in one of claims 1 to 4, in which the negative relative pressure corresponds to an absolute pressure of below 10 kPa, preferably of below 1 kPa.

6. The method as claimed in one of claims 1 to 5, in which the operating pressure of the gas analyzer (25, 125, 225, 325) is comprised between 80 kPa and 120 kPa, preferably between 86 kPa and 108 kPa.

7. The method as claimed in one of claims 1 to 6, in which the gas analyzer comprises a fuel gas detector selected from the group consisting of infrared detectors and electrochemical-cell detectors.

8. The method as claimed in any one of claims 1 to 7, in which the step of raising the pressure of the dilute gas sample comprises:

storing the withdrawn sample of gaseous phase in an intermediate enclosed space (112, 321) connected to the sampling duct, and
moving a mobile wall in the intermediate enclosed space in order to confine the dilute gas sample to a measurement enclosed space (121) of smaller capacity than the intermediate enclosed space.

9. The method as claimed in one of claims 1 to 8, in which the step of obtaining the dilute gas sample comprises:

withdrawing a sample of the gaseous phase under the negative relative pressure in the thermally insulating barrier through the sampling duct opening to the outside of the tank wall, and adding a measured quantity of inert gas to the withdrawn gaseous phase sample.

10. The method as claimed in claim 9, in which the steps of withdrawing, diluting and compressing the sample are performed by means of a Venturi-effect suction device (220), the Venturi-effect suction device comprising:

a main pipe (35) having an inlet connected to a source of the inert gas under pressure and an outlet connected to a measurement enclosed space or to an intermediate enclosed space, and a suction pipe (36) having an upstream end connected to the sampling duct and a downstream end opening laterally into a convergent-divergent of the main pipe in such a way that a stream of inert gas along the main pipe causes a depression in the suction pipe.

11. The method as claimed in claim 9 or 10, in which the step of taking the sample comprises:

pumping the gaseous phase sample through the sampling duct (11, 111, 211, 311) towards an intermediate enclosed space (12, 112, 221, 321), and
isolating the intermediate enclosed space from the thermally insulating barrier.

12. The method as claimed in claim 11, in which the controlled quantity of inert gas is added to the intermediate enclosed space (12, 112), the step of compressing the dilute gas sample comprising:
pumping the dilute gas sample from the intermediate enclosed space towards a measurement enclosed space (21, 121) coupled to the gas analyzer.

13. The method as claimed in claim 11, in which the steps of diluting and compressing the sample are performed by means of a Venturi-effect suction device (220), the Venturi-effect suction device comprising:

a main pipe (35) having an inlet connected to a source of the inert gas under pressure and an outlet connected to a measurement enclosed space, and
a suction pipe (36) having an upstream end connected to the intermediate enclosed space and a downstream end opening laterally into a convergent-divergent of the main pipe in such a way that a stream of inert gas along the main pipe causes a depression in the suction pipe.

14. A monitoring device (10, 210) suitable for a sealed and thermally insulated tank (1, 201) intended to contain a low-temperature liquefied fuel gas, in which tank a wall of the tank comprises a multilayer structure mounted on a bearing wall, the multilayer structure comprising a sealing membrane in contact with the liquefied fuel gas contained in the tank and a thermally insulating barrier (3, 203) arranged between the sealing membrane and the bearing wall, the thermally insulating barrier comprising insulating solid substances and a gaseous phase kept under a negative relative pressure,
the monitoring device comprising:
a sampling duct (11, 111, 211) connecting the thermally insulating barrier to the outside of the tank wall, said sampling duct (11, 111, 211) being equipped with an isolation valve (14):

a measurement enclosed space (21, 121, 221),
a gas analyzer (25, 125, 225) coupled to the measurement enclosed space for measuring a concentration of the fuel gas in the measurement enclosed space,
a pumping device (20, 112, 220, 320) connected to the sampling duct and able to withdraw a sample of the gaseous phase under the negative relative pressure in the thermally insulating barrier and to transfer the sample of the gaseous phase to the measurement enclosed space (21, 121, 221), the monitirong device being **characterized in that** it comprises:

an intermediate enclosed space (12, 112) connected to the thermally insulating barrier by the sampling duct and connected to the measurement enclosed space (21, 121, 221) ;
an inert gas reservoir (15, 215) connected to the intermediate enclosed space (12, 112) and designed to add a quantity of inert gas to the gaseous phase that has been withdrawn, in the intermediate enclosed space (12, 112), and
a measurement device (17, 217, 317) for measuring the quantity of inert gas added to the gaseous phase.

15. The device as claimed in claim 14, further comprising a data processing system (30, 330) able to determine a dilution ratio brought about by the addition of a controlled quantity of inert gas to the gaseous phase that has been withdrawn as a function of measurements of the pressure and temperature of the gaseous phase that has been withdrawn before and after the addition of the controlled quantity of inert gas to the gaseous phase and to determine a concentration of the fuel gas in the gaseous phase of the thermally insulating barrier as a function of the concentration measured by the gas analyzer and of the dilution ratio brought about by the addition of a controlled quantity of inert gas.

16. The device as claimed in claim 14 and 15, in which the pumping device comprises a vacuum pump (20).

17. The device as claimed in one of claims 14 to 16, in which the pumping device comprises a Venturi-effect suction device (220), the Venturi-effect suction device comprising:

a main pipe (35) having an inlet connected to the reservoir of inert gas and an outlet connected to the measurement enclosed space, and
a suction pipe (36) having an upstream end connected to the sampling duct by way of the intermediate enclosed space and a downstream end opening laterally into a convergent-divergent of the main pipe in such a way that a stream of inert gas along the main pipe causes a depression in the suction pipe.

18. A sealed and thermally insulated tank (71) intended to contain a low-temperature liquefied fuel gas and equipped with a monitoring device (10, 210, 310, 410) as claimed in one of claims 14 to 17,
in which tank a wall of the tank comprises a multilayer structure mounted on a bearing wall (302), the multilayer structure comprising a primary sealing membrane (304) in contact with the liquefied fuel gas contained in the tank, a secondary sealing membrane (40) arranged between the primary sealing membrane and the bearing wall, a primary thermally insulating barrier (41) arranged between the primary sealing membrane and the secondary sealing membrane, and a secondary thermally insulating barrier (42) positioned between the secondary sealing membrane and the bearing wall, and in which tank a or each thermally insulating barrier comprises insulating solid substances and a gaseous phase kept under a negative relative pressure, the monitoring device comprising a first sampling pipe (311) opening into the primary thermally insulating barrier and a second sampling pipe (69) opening into the secondary thermally insulating barrier.

19. A ship (70) for carrying a cold liquid product, the ship comprising a double hull (72) and a tank (71) as claimed in claim 18 arranged in the double hull.

20. A method for loading or unloading a ship (70) as claimed in claim 19, in which a cold liquid product is carried through insulated piping (73, 79, 76, 81) from or to a floating or on-shore storage facility (77) to or from the tank of the ship (71).

21. A transfer system for transferring a cold liquid product, the system comprising a ship (70) as claimed in claim 19, insulated piping (73, 79, 76, 81) arranged in such a way as to connect the tank (71) installed in the hull of the ship to a floating or on-shore storage facility (77) and a pump for causing the cold liquid product to flow in a stream through the insulated piping from or to the floating or on-shore storage facility to or from the tank of the ship.

FIG.1

FIG.2

FIG.7

EP 3 074 744 B1

FIG.3

FIG.4

21

FIG.6

FIG.5

ANY REFERENCE TO FIGURE 10 SHALL BE CONSIDERED AS NON-EXISTENT

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2535831 A
- FR 2317649